# EUROPÄISCHE PATENTSCHRIFT

(11) **EP 3 593 924 B1**
(45) Veröffentlichungstag und Bekanntmachung des Hinweises auf die Patenterteilung: **13.09.2023**
(21) Anmeldenummer: 19186006.3
(22) Anmeldetag: 20.10.2017
(51) Int. Cl.: B22D 17/14

(54) **VORRICHTUNG MIT FILTERMODUL ZUR HERSTELLUNG VON DRUCKGUSSTEILEN**
APPARATUS WITH A FILTER MODULE FOR MANUFACTURING PRESSURE CAST PARTS
DISPOSITIF AVEC MODULE FILTRANT POUR LA FABRICATION DE PIECES COULEES SOUS PRESSION

(30) Priorität: 04.11.2016 DE 102016221678; 04.11.2016 DE 102016221674; 04.11.2016 DE 102016221675
(43) Veröffentlichungstag der Anmeldung: 15.01.2020
(62) Teilanmeldung aus: 17793615.0
(73) Patentinhaber: MAGNA BDW technolgies GmbH, 85570 Markt Schwaben (DE)
(72) Erfinder: WERNER, Christian, 85659 Forstern (DE); DUGUM, Armin, 81243 München (DE)
(74) Vertreter: Rausch, Gabriele

(56) Entgegenhaltungen:
- EP-A1- 0 819 487
- CN-Y- 2 617 500
- JP-A- 2000 343 194

## Beschreibung

Die vorliegende Erfindung betrifft eine Vorrichtung mit Filtermodul zur Herstellung von Druckgussteilen mit einer Druckgießform und einer zur gesteuerten Evakuierung eines Formhohlraumes vorgesehenen Absaugvorrichtung, welche aus einer Vakuumeinheit und einer die Vakuumeinheit und die Druckgießform verbindenden Saugleitung besteht.

### Stand der Technik

Eine gattungsgemäße Vorrichtung zur Herstellung von Druckgussteilen ist aus der DE 30 02 886 C2 bekannt. Bei dieser wie auch bei anderen bekannten Druckgießmaschinen mit Absaugvorrichtungen zum Entlüften der Gießformen erfolgt die letzte Formfüllung mit flüssigem Metall im Zusammenwirken mit der Evakuierung der Form innerhalb weniger Millisekunden. Ziel ist es dabei, ein möglichst hohes Vakuum in dem Formhohlraum der Gießform zu erreichen, um eine möglichst hohe Qualität des Gussteiles zu erreichen.

Die EP 0 600 324 A1 beschreibt ein Verfahren zur Herstellung eines Vakuums bei einer Vakuum-Druckgießmaschine, bei welchem das an die Druckgießform anzulegende Vakuum während des Gießprozesses einer Regelung unterziehbar ist. Dabei wird das über ein Vakuumventil angelegte Vakuum mittels eines Schaltventils so in seinem Druckverlauf geregelt, dass sich der Druck im Formhohlraum, in der Gießkammer und im Saugrohr nach einer bestimmten einstellbaren Funktion pro Zeiteinheit regelt. Der Unterdruck wird über eine Vakuummesssonde erfasst, die den Druck in einer Vakuum-Anschlussleitung misst.

Bei einem Druckgießverfahren ist es aber auch erforderlich, Trenn- und Schmierstoffe einzusetzen. Diese Zusätze haben in erster Linie die Aufgabe, eine Trennschicht zwischen dem flüssigen Metall und der Kontur der Gießform zu erzeugen, so dass ein Anhaften des Metalls an der Gießform verhindert wird. Dies tritt insbesondere beim Aluminiumguss aufgrund der hohen Affinität des Aluminiums zum Eisen der Gießform auf. Üblicherweise werden für die Erzeugung der genannten Sperrschicht wassermischbare Trennmittel eingesetzt. Durch diese Trennmittel wird zusätzlich eine Kühlung oder Temperierung der Druckgießform erreicht.

Nachteilig an diesen Vorrichtungen bzw. Verfahren ist jedoch, dass nach Herausnahme des Gussteiles ein neuerlicher Trennmittelauftrag erforderlich ist und beim Trockenblasen der Gießform eine Restfeuchte im Formenhohlraum verbleibt. Zwar kann durch den sich anschließenden Evakuierungsvorgang der Gießform diese Restfeuchte zu einem gewissen Prozentsatz aus dem Formenhohlraum gemeinsam mit anderen beim Gießvorgang entstehenden Gasen abgesaugt werden, allerdings verbleibt immer ein gewisser Restfeuchteanteil in der Gießform. Diese in der Druckgießform verbleibende Restfeuchte reagiert aber bei einem anschließenden Gießvorgang mit dem flüssigen Metall wiederum unter Gasbildung. Letztere wirkt sich dann in Form von Porosität oder Lunkern im fertigen Gussteil aus. Dadurch ergibt sich eine erhebliche Qualitätsminderung des fertigen Gussteiles.

Aus der EP0819487B1 ist eine Vorrichtung zur Herstellung von Druckgussteilen bekannt, die zwei in einer Saugleitung angeordnete Ventile aufweist. Die beiden parallel geschalteten Ventile stellen die Verbindung zwischen einem Vakuumtank und einer Druckgießform her bzw. unterbrechen diese. Durch das Verschließen der beiden Ventile entsteht ein sogenannter Referenzraum in der Saugleitung. Dieser Referenzraum gibt den Zustand wieder, der geherrscht hat, als der letzte Evakuierungsprozess der Druckgießform beendet wurde. Dadurch ist es auf einfache Weise möglich, verschiedenste, für die Qualität des Druckgusses entscheidende Parameter, insbesondere den Restfeuchtegehalt im System zu bestimmen und die Vorrichtung entsprechend zu steuern.

Aus der DE10022560 A1 ist eine Druckgießanordnung bekannt, die eine Drucküberwachung am Entlüftungskanal aufweist, der ein Ventil und ein Filter besitzt.

Alle Komponenten des Systems vor allem Ventile und Sensoren unterliegen einem starken Verschleiß und sind wartungsintensiv.

JP 2000-343 194 A zeigt eine Druckgussmaschine für ein Vakuumverfahren. Ein elektromagnetisches Ventil zum Öffnen/Schließen eines Vakuumkanals ist an dem Vakuumkanal angebracht. Wenn das elektromagnetische Ventil geöffnet und die Innenseite des Hohlraums abgesaugt wird, wird dem Hohlraum durch eine Pulverzuführvorrichtung eine Pulverformabgabe zugeführt. Ein Filter mit einem Filtrationslochdurchmesser, der kleiner als der durchschnittliche Korndurchmesser der Pulverformabgabe ist, ist zwischen dem elektromagnetischen Ventil und dem Vakuumtank angeordnet. Wenn der Vakuumtank das Innere des Hohlraums absaugt, wird ein großer Teil der übermäßigen Freisetzung von Pulverformen vom Filter aufgefangen.

CN 2 617 500 Y zeigt eine Vakuumgießmaschine, wobei ein erster Filter und ein zweiter Filter auf der Rohrleitung zwischen einem Formvakuumventil und dem Vakuumspeicher einer Vakuumluftpumpe angeordnet sind. Zwischen den beiden Filtern befindet sich ein Steuerelement, das das Öffnen und Schließen der Rohrleitung steuern kann. Zusätzlich sind zwischen dem ersten Filter und dem Steuerelement eine Hochdruck-Luftleitung und ein Steuerelement angeordnet, das das Öffnen und Schließen der Hochdruck-Luftleitung steuern kann. Der erste und der zweite Filter sind von der mechanischen Konstruktion, die einfach zu demontieren und zu montieren ist, wodurch die Vorteile eines effizienten Schutzes der Nutzungsdauer und der Lebensdauer der Vakuum-Luftpumpe sowie der schnellen Demontage und Reinigung des Filters erreicht werden können.

Aus der DE4313800 A1 ist ein Verfahren zur Steuerung einer Druckgussvorrichtung mit gesteuerter Evakuierung bekannt. Diese Steuerung ist zentral, weist aber keine Module auf, die für verschiedene Aufgaben vorgesehen sind.

Aus der DE 20 2004 017 551 U1 ist eine Steuerungsanlage für hydraulische und pneumatische Komponenten bekannt.

Es ist Aufgabe der vorliegenden Erfindung, eine verbessertes Filtermodul bereitzustellen, welches die Komponenten schützt und/oder einer schnellen Wartung zugänglich macht.

Es ist Aufgabe der vorliegenden Erfindung, eine verbesserte Vorrichtung mit Filtermodul zur Herstellung von Druckgussteilen bereitzustellen, welches die Komponenten schützt und/oder einer schnellen Wartung zugänglich macht.

Die Aufgabe wird auch gelöst mit einer Vorrichtung zur Herstellung von Druckgussteilen mit einer Druckgießform und einer zur gesteuerten Evakuierung eines Formhohlraums vorgesehenen Absaugvorrichtung, welche mindestens aus einer Vakuumeinheit und aus mindestens einer die Druckgießform verbindenden Saugleitung besteht, wobei die Saugleitung an einem Formvakuumventil im Formhohlraum endet, wobei die Vorrichtung mit einer zentralen Steuerung verbunden ist, und in der mindestens einen Saugleitung ein Filtermodul eingesetzt ist, das mindestens einen Filter, einen Feuchtesensor und einen Drucksensor enthält, wobei das Filtermodul so eingebaut ist, dass das Verbindungsstück zwischen Filtermodul und Formvakuumventil, eine Leitung, kürzer als eine Absaugleitung zwischen Filtermodul und Vakuumpumpe ist, wobei das Filtermodul einen Filtereinsatz und mindestens ein Filtergehäuse bestehend aus Boden und Deckel enthält, wobei Boden und Deckel über mindestens zwei Rändelschrauben miteinander dicht verbunden sind und einen Bauraum für den Filtereinsatz bilden.

Durch den Einsatz eines Filtermoduls, das mehrere Funktionen in einem Bauteil integriert, ist es gelungen, die Vorrichtung zur Herstellung von Druckgussteilen so aufzubauen, dass eine einfache Wartung möglich ist. Das Filtermodul integriert dabei mehrere Funktionen wie die Filterfunktion und Messfunktionen in einem Bauteil, so dass die Vorrichtung mit dem Filtermodul einfach ausgestattet werden kann.

Es ist von Vorteil, dass das Filtermodul so eingebaut ist, dass das Verbindungsstück zwischen Filter und Formvakuumventil, die Leitung, kürzer als die Absaugleitung zwischen Filter und Vakuumpumpe ist. Dadurch kann das Filtermodul möglichst nah am eigentlichen Formhohlraum angebracht sein, was eine Optimierung der Messungen der Parameter im Formhohlraum ermöglicht.

Durch den Aufbau mit Rändelschrauben kann das Filtergehäuse einfach gewartet werden. Es ist zum Öffnen und Schließen kein Werkzeug notwendig, und der Produktionsprozess wird dadurch nur kurz unterbrochen.

Es ist von Vorteil, dass Boden und Deckel über einen O-Ring dicht miteinander verbunden sind, wobei die O-Ring- Dichtung eine zuverlässige Dichtung darstellt, die auch bei häufiger Wartung zuverlässig dichtet.

Es ist weiterhin von Vorteil, dass der Filtereinsatz aus einem von zwei Lochscheiben stirnseitig begrenzten Metallzylinder ausgebildet ist, sodass der gesamte Filtereinsatz auf einfache Art und Weise aus dem Filtergehäuse entnommen werden kann.

Der Filtereinsatz enthält mindestens einen Feinfilter und einen Grobfilter im Metallzylinder, so dass Rückstände aus dem Gießprozess in den Filtern abgeschieden werden können.

Dabei sind die Feinfilter und Grobfilter mit einem Sicherungsring im Metallzylinder gesichert.

Das Filtermodul integriert dabei mehrere Funktionen wie die Filterfunktion und Messfunktionen in einem Bauteil, so dass die Vorrichtung mit dem Filtermodul einfach ausgestattet werden kann.

Vorteilhafterweise sitzt das Filtermodul zwischen Gusswerkzeug und einer Messeinrichtung.

Einsetzbar ist die erfindungsgemäße Lösung vorteilhafterweise in Vorrichtungen, in denen die Druckgießform aus einer beweglichen Formhälfte und einer fest angeordneten Formhälfte besteht.

Je nach Ausführungsform der Druckgießmaschine ist es von Vorteil, dass die Saugleitung an der beweglichen Formhälfte oder der festen Formhälfte befestigt ist.

Die Vorrichtung weist den Vorteil auf, dass die Formvakuumventile unterschiedliche Typen von Ventilen sind. Damit ist es möglich Ventile an ganz unterschiedlichen Druckgießmaschinen einzusetzen, die auch unterschiedliche Ventiltypen verwenden. Ein Austausch der Ventiltypen beispielsweise eines pneumatischen Ventils durch ein hydraulisches Ventil ist auf einfache Weise möglich.

Vorteilhafterweise ist die Steuerung dazu ausgelegt mindestens einen Typen von Formvakuumventilen anzusteuern.

Dabei ist die Steuerung für eine Vorrichtung zur Herstellung von Druckgussteilen aus mit einer Druckgießform und einer zur gesteuerten Evakuierung eines Formhohlraums vorgesehenen Absaugvorrichtung eingerichtet, wobei die Vorrichtung mit einer zentralen Steuerung verbunden ist, wobei die Steuerung eine Steuereinheit aufweist, bei der mindestens ein Modul mit der Vorrichtung zur Herstellung von Druckgussteilen und weitere Module mit mindestens einer hydraulischen und/ oder pneumatischen Einheit für die Ansteuerung von Ventilen verbunden sind.

Die Steuerung ist dabei besonders flexibel und an die Notwendigkeiten unterschiedlicher Anlagen anpassbar.

Es ist von Vorteil, dass das mindestens eine Modul für die hydraulische Einheit parallel mit dem mindestens einem Modul für die pneumatische Einheit betreibbar ist. Das erlaubt den Einsatz der Steuerung in gemischten Anlagen, in denen unterschiedliche Bauteile aus der Hydraulik oder Pneumatik verwendet werden.

Die Steuereinheit besitzt Komponenten zur Ansteuerung von Ventilen im Gusswerkzeug für den Einsatz von vakuumgestütztem Druckguss, wobei der Type der Ventile, also mechanisch, hydraulisch, pneumatisch austauschbar ist. Damit kann mit unterschiedlichen Modulen der Gemischtbetreib der Vorrichtung erfolgen.

Es ist von Vorteil, wenn die Komponenten zur Ansteuerung von Ventilen aus Softwarekomponenten bestehen. Die Steuereinheit weist Eingänge für alle an der Vorrichtung erhobenen Messdaten auf.

### Beschreibung der Erfindung

Weitere Einzelheiten, Merkmale und Vorteile der Erfindung ergeben sich aus der folgenden Beschreibung eines zeichnerisch dargestellten Ausführungsbeispiels.

Darin zeigen:
Figur 1 eine dreidimensionale Darstellung der Vorrichtung,
Figur 2 eine schematische Darstellung der erfindungsgemäßen Vorrichtung zur Herstellung von Druckgussteilen in Seitenansicht;
Figur 3 eine schematische Darstellung der erfindungsgemäßen Vorrichtung zur Herstellung von Druckgussteilen in Aufsicht,
Figur 4 einen Schnitt durch ein Filtermodul
Figur 5 eine schematische Darstellung eines Filters,
Figur 6 einen Schnitt durch einen Filtereinsatz
Figur 7 ein Schema einer Steuereinheit

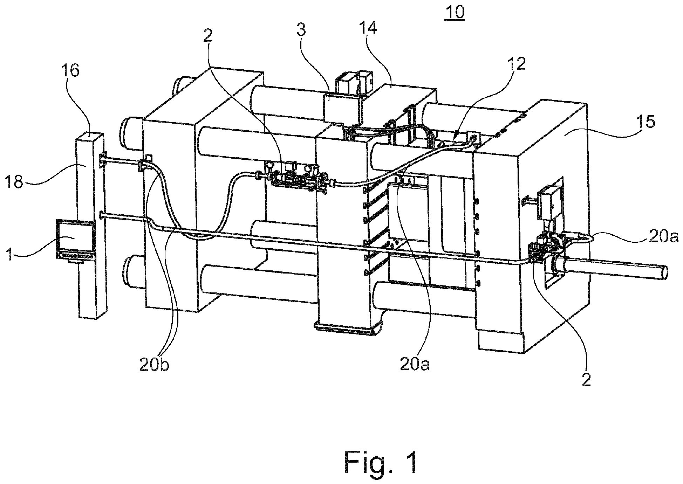

Eine in der Figur 1 schematisch dargestellte Vorrichtung 10 zur Herstellung von Druckgussteilen umfasst im Wesentlichen eine Druckgießform 12 und eine Absaugvorrichtung 16. Die Druckgießform 12 besteht dabei in diesem Beispiel aus einer beweglichen Formhälfte 14 und einer festen Formhälfte 15. Die Absaugvorrichtung 16 besteht insbesondere aus einer Saugleitung 20 und einer damit verbundenen Vakuumpumpe 18. An dem der Vakuumpumpe 18 gegenüberliegendes Ende der Saugleitung ist diese mit der beweglichen Formhälfte 14 und/oder mit der feststehenden Formhälfte 15 der Druckgießform 12 verbunden. Im Ausführungsbeispiel sind 2 Saugleitungen 20 mit der Vakuumpumpe 18 verbunden. Die Saugleitungen enden jeweils an den Formhälften 14 und 15.

Zwischen der Druckgießform 12, bzw. zwischen den Formhälften und der Vakuumpumpe 18 sind Filtermodule 2 in der Saugleitung angeordnet. Das Formvakuumventil ist in Figur 1 nicht dargestellt, es befindet sich in der Druckgießform in der Nähe des Anschlusses der Saugleitung 20. Die Filter sind in der Saugleitung angeordnet und teilen die Saugleitung 20 in einen ersten Abschnitt, der Leitung 20a und einen zweiten Abschnitt, der Absaugleitung 20b. Eine Steuereinheit 3, die in diesem Beispiel über hydraulische Anschlüsse mit dem Formvakuumventil verbunden ist, ist an der Druckgussmaschine angebracht. Eine Steuerung 1 ist dabei lediglich durch einen Bildschirm angedeutet.

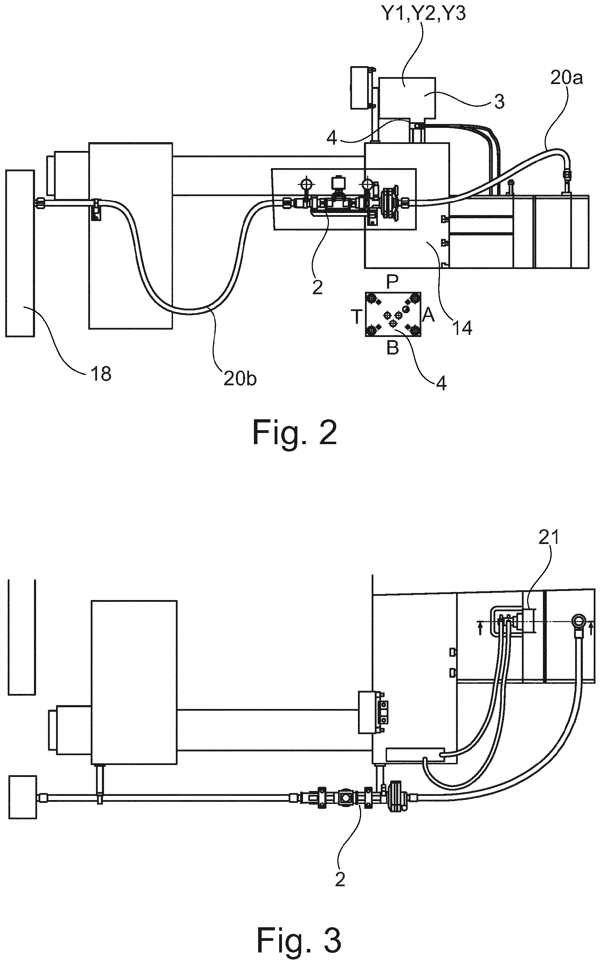

Die Vorrichtung ist in Figur 2 als Seitenansicht und in Figur 3 als Aufsicht dargestellt, wobei das Formvakuumventil 21 dargestellt ist.

Die Saugleitung 20 enthält folgenden Bauteilen: Leitungen 20a vom Formvakuumventil 21 zum Hauptventil, ein Filtermodul 2 sowie eine Absaugleitung 20b zwischen Filtermodul 2 und Vakuumpumpe 18.

Die Saugleitung bzw. der Abschnitt der Leitung 20a beginnt nahe am oder im Formvakuumventil 21.

Die Saugleitung besteht aus einem besonderen hitzebeständigen Unterdruckschlauch und setzt sich zu dem Filtermodul 2, durch das Filtermodul 2 über einen Unterdruckschlauch zu einem Handventil, das nicht dargestellt ist, und der Druckgussmaschine fort. Von dort führt die Leitung in ein Vakuumleitungssystem und endet an der Vakuumpumpenstation.

Das Filtermodul 2 ist als ein kompaktes Bauteil ausgebildet und hat unterschiedliche Aufgaben.

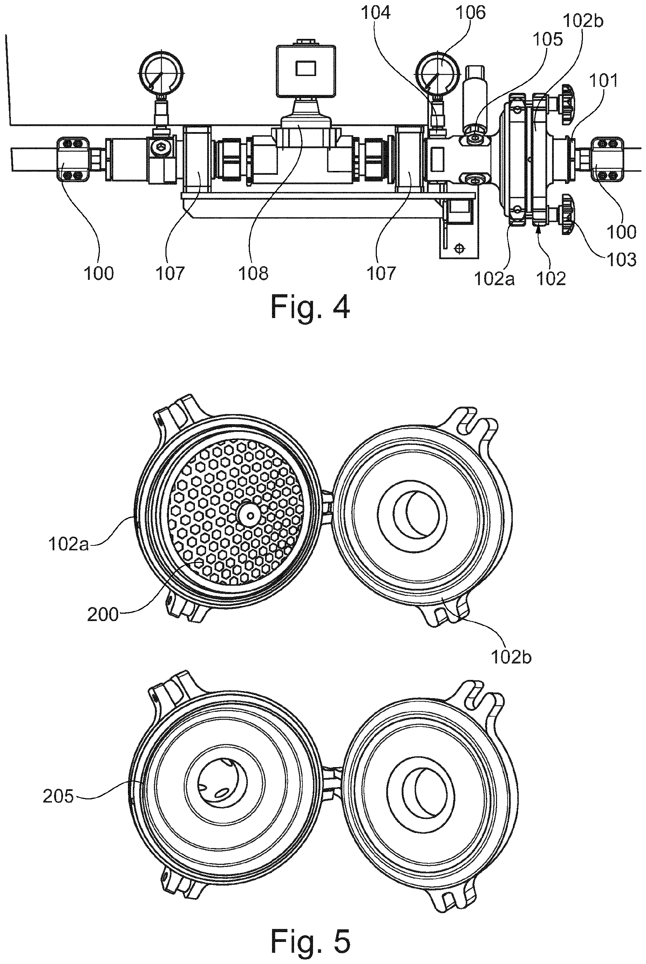

Das Filtermodul wird dabei in Figur 4 vergrößert dargestellt.

Eingangsseitig und ausgangsseitig weist das Filtermodul einen Anschluss auf, der über Verschraubungen 100 mit 1 oder 2-Zoll Verbindungsstücken verbunden werden kann. Über diese Verschraubungen ist das kompakte Filtermodul 2 mit der Verschlauchung des Vakuumsystems verbindbar.

Über einen Reduzierdoppelnippel 101 ist ein Filtergehäuse 102 angebunden. Am Filtergehäuse sind Rändelschraube 103 zu erkennen, die das Filtergehäuse, das aus einem Boden 102a und einem Deckel 102b besteht, verbinden.

An das Filter angeschlossen ist ein Drucksensor 104, der über einen Reduzierung 105 angeschlossen ist.

Nachgeordnet ist ein Manometer 106 angebracht. Über Schellen 107 und Verschraubungen sitzt ein 2/2-Wegeventil 108, also ein Ventil mit zwei gesteuerten Anschlüssen und zwei Schaltstellungen im Filtermodul. Dieses Ventil dient als Hauptventil.

Im 2/2 Wegeventil ist die die Restfeuchtemessung untergebracht, die wie im Stand der Technik in einen Referenzraum ragt.

Der Referenzraum gibt die Umgebungsparameter des Zustandes wieder, der geherrscht hat, als der Druckgießvorgang abgeschlossen und die Evakuierung der Druckgießform 12 abgeschlossen wurde.

Alle Sensoren, die Drucksensoren und die Restfeuchtesensoren sind direkt oder indirekt mit der Steuereinheit 1 verbunden. Auch die Ventile sind mit dieser Steuereinheit 1 verbunden, wobei die Steuereinheit den gesamten Gießprozess mit allen Komponenten entsprechend der ermittelten Messwerte kontrolliert.

Der im Filtermodul eingesetzte Filter selbst besteht aus einem Filtergehäuse 102, das aus einem Boden 102a und einem Deckel 102b besteht. Die beiden Komponenten sind dabei mit den Rändelschrauben 103 verbunden, so dass die Gehäusebauteile auf einfache Art und Weise getrennt werden können. Um die Gehäuseteile 102a und 102b zu dichten, liegt ein O-Ring 205 an einer planen Umfangsflächen der Gehäuseteile an, die zur Führung des O-Rings eine Rille aufweise drei Rändelschrauben, die äquidistant zueinander angebracht sind, verbunden. Der Fachmann kann natürlich auch jede andere Zahl an Rändelschrauben verwenden. Der Einsatz der Rändelschrauben vereinfacht die Wartung des Filters sehr, da das Filter ohne Einsatz eines Werkzeugs von einem Menschen geöffnet werden kann.

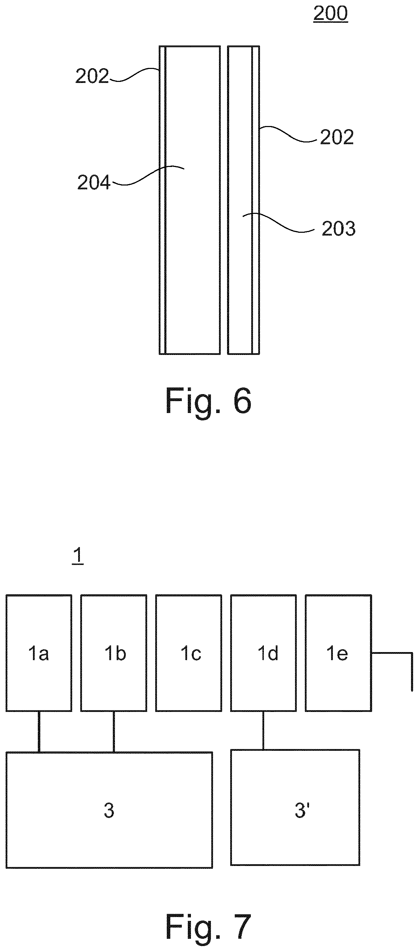

Wenn die beiden Bauteile, wie in Figur 5 gezeigt, getrennt sind, erkennt man im Inneren einen Filtereinsatz 200. Der Filtereinsatz besteht wie in Figur 6 im Schnitt gezeigt aus einem Metallzylinder, der von zwei Lochscheiben 201 abgeschlossen wird. Zwischen den beiden Lochscheiben 201 sind ein Feinfilter 203 und ein Grobfilter 204 angebracht. Zur Fixierung des Feinfilters und des Grobfilters im Metallzylinder dient ein Sicherheitsring.

Der Grobfilter besteht aus Stahlfilterwolle und kann durch Herausklopfen des Schmutzes aus dem Gießprozess gesäubert werden.

Der Feinfilter wird mit Benzol oder einem geeigneten Reinigungsmittel gereinigt. Es ist wichtig, dass die grobe Seite des Filters mit dem Stahlwollfilter in Richtung des Formvakuumventils und das Feinfilter in Richtung des Magnetventils weist.

Die Wechselintervalle des Filtereinsatzes hängen vom Umfang der während einer Produktionsschicht abgelagerten Schmutzteile ab. Bei starkem Einsatz sind stündliche Filtereinsatzwechsel durchaus handhabbar.

Die Filterkombination aus einem Grobfilter und einem Feinfilter reduziert den Eintrag von Schmutz aus dem Gießprozess in Richtung der Sensoren auf ein Mindestmaß.

Das Filtergehäuse 102 ist mit einem Druckmesser ausgestattet, der den Istwert des Vakuums während der Entleerungsphase anzeigt, der Endwert stellt hierbei das Vakuumniveau im Hohlraum dar.

Das Filtergehäuse 102 verfügt integriert über eine 1/2-Zoll-Öffnung zum Anschluss des Sensors 104 zur Messung und Aufzeichnung des Druckes.

Das analoge Ausgangssignal des Sensors wird an die Steuereinheit 1 übertragen. Das Filtermodul mit Magnetventil und weiteren Bauteilen arbeitet durch den Einsatz der Filter wesentlich verschleißfreier als ohne Filter, da diese auf einfache Art und Weise ersetzt und/oder gereinigt werden können.

Die erfindungsgemäße Maschine zur Herstellung von Druckgussteilen verlangt weiterhin mindestens ein formschlüssiges Ventil zur Absaugvorrichtung nahe der Gießform.

Bei Druckgießmaschinen mit Absaugvorrichtungen zum Entlüften der Formen erfolgt die letzte Formfüllung mit flüssigem Metall im Zusammenwirken mit der Evakuierung der Form innerhalb weniger Millisekunden. Zur Erzielung eines möglichst hohen Vakuums ist es demnach zweckmäßig, den zum Evakuieren dienenden, mit der Form in Verbindung stehenden Saugkanal möglichst spät zu schließen, d.h. kurz bevor das flüssige Metall in das Saugsystem einspritzen kann. Geeignete Ventile werden zum Beispiel als hydraulische Ventile in der DE3002886 A1 beschrieben.

Es gibt alternative Ventilformen, wie beispielsweise pneumatische Ventile oder Waschbrettventile, die verwendet werden, um den Druck in der Gießform schnell zu reduzieren.

Pneumatische Ventile haben systembedingte Probleme. Im Vergleich zu hydraulischen Antrieben sind die pneumatischen Kräfte und Momente wesentlich geringer und pneumatische Zylinderbewegungen erfolgen stets Punkt-zu-Punkt. Die Endposition wird jeweils durch einen Festanschlag definiert. Dadurch müssen pneumatische Ventile sehr nahe an der Gießform angebracht sein, was den Verschleiß dieser Komponenten erhöht.

Waschbrettventile werden als "offenes Entlüftungssystem" bezeichnet: Die Entlüftungsleistung des Ventils wird vorwiegend durch die Spaltgröße zwischen den Ventilhälften und die Ventilbreite bestimmt. Diese Ventile werden oft in Kombination mit einem weg- oder zeitgesteuerten Ventil eingesetzt.

Der Typus der Ventile, als Formvakuumventile, begrenzt die Leistung der erfindungsgemäßen Vorrichtung nicht. Vielmehr ist es so, dass unterschiedliche Ventiltypen einsetzbar sind. Darüber hinaus muss eine Druckgießmaschine nicht zwangsweise mit einem Ventiltypen ausgestattet sein, sondern es sind auch Kombinationen unterschiedlicher Ventiltypen erlaubt.

Die erfindungsgemäße Vorrichtung weist einen Steuereinheit 1 auf, die alle Messwerte der Vorrichtung verarbeitet und mit der alle hydraulischen, pneumatischen Systeme angesteuert werden.

Eine hydraulische Steuereinheit 3 steuert bei einem hydraulischen Ventil den Druckzylinder vom Einsetzen des Einsatzstückes der Ventilbetätigung bis zum Öffnen und Schließen des Formventils mittels Steuerbolzen.

Diese beispielhafte hydraulische Steuereinheit 3 ist an einer Verteilerplatte 4 angeschraubt. Auf der Verteilerplatte befinden sich die folgenden Anschlüsse:
P = Betriebsdruck der Druckgussmaschine (min 120-160 Bar);
T = Tankrohr (0 Bar);
A = Zylinder ausrücken = offenes Ventil (mit 120-160 Bar);
B = Zylinder einrücken = geschlossenes Ventil. (mit einem Speicherdruck von ca. 95-100 Bar)

Ein Regelventil Y1 , ein Wegeschieberventil Y2 mit einem Patronenrückschlagventil im P-Rohr von Y2, ein Wegeschieberventil Y3, ein Druckminderventil (≈ 95 - 100 Bar), ein Membranspeicher (Po-= 60 Bar Stickstoff) und ein Patronenrückschlagventil im P-Rohr der Grundplatte sind in einer Steuereinheit 3 in einem einzigen Gehäuse integriert.

Das integrierte Wegeschieberventil Y3 dient als Sicherheitsventil zum automatischen Ablassen des Speicher-Druckes beim Ausschalten der Anlage. Der Membranspeicher ist für einen konstanten Druck zum Bewegen des Hydraulikzylinders und damit des Einschubs zum Öffnen / Schließen des Formvakuumventils vorgesehen.

Die Vorrichtung zur Herstellung von Druckgussteilen weist zudem eine modular aufgebaute Ansteuerung auf. Die Steuerung 1 besitzt Eingänge für die Erfassung aller an der Vorrichtung erhobenen Messdaten und Ansteuerausgänge für Saugstrecken und Untereinheiten wie der hydraulischen Steuerung 3 und der pneumatischen Steuerung 3'. Die Steuerung ist so aufgebaut, dass sie mit unterschiedlichen Bauelementen und Ventilformen kompatibel gestaltet ist. Die Steuerung kann parallel verschiedenen Typen von Ventilen, wie ein hydraulisches und ein pneumatisches Ventil ansteuern. Ein Ersatz eines Ventiltyps durch einen anderen Typen ist auf diese Art einfach, da lediglich das dazugehörige Steuerungsmodul aktiviert und angepasst wird.

Mit der erfindungsgemäßen Steuerung sind mehrere Formevakuierungslinien und Schnellvakuumlinien ansteuerbar.

Umgesetzt wird die Steuerung in einem Schaltschrank mit PLC Steuerung. Die Steuerung erlaubt eine sichere Abfrage basierend auf der Kolbenposition des Formventils, um den Schließzustand des Ventils zu detektieren.

Die Verschlussposition kann aber auch ohne Positionsbestimmung durch Messung in der Schussbewegung einstellbar und variabel sein und wird so von der Steuerung über festvorgegebene Zeitabläufe angesteuert.

In Figur 7 ist die Steuerung schematisch dargestellt, Die eigentliche Software ist modular als Softwarekomponenten 1a, 1b, 1c, 1d, 1e gezeigt. Die Software ist dazu geeignet, einzelne Module zusammen zu betreiben, während nicht gewünschte Module inaktiv bleiben.

Die Softwaremodule 1a...1e steuern in diesem Beispiel über Datenverbindungen zwei Steuereinheiten 3 und 3' an. Dabei handelt es sich entweder um Steuereinheiten für Ventile gleichen oder unterschiedlichen Typus. So kann die Steuereinheit 3 eine Steuereinheit für hydraulische Formvakuumventile sein, die Steuereinheit 3' dagegen eine Steuereinheit für pneumatische Ventile. Die Steuerung steuert darüber hinaus optional die Vakuumeinheiten sowie die eigentliche Druckgießmaschine.

Das Verfahren zur Herstellung von Druckgussteilen ist durch folgende Verfahrensschritte charakterisiert:
a) Evakuierung einer Druckgießform,
b) Füllen der Druckgießform mit Gießmaterial,
c) Entnehmen des Druckgussteiles,
e) Messungen von Umgebungsparameter im Filtermodul und
f) entsprechend dem Ergebnis dieser Messungen eine Vorrichtung zur Herstellung von Druckgussteilen gesteuert.

Dadurch ist gewährleistet, dass das Verfahren entsprechend den tatsächlichen Umgebungsparametern in der Druckgießform gesteuert und auf entsprechende optimierte Umgebungsparameter normiert werden kann. So ist es möglich, den Gießprozess so einzustellen, dass die gemessene Restfeuchte ein je nach Druckgießform und -teil typisches Minimum erreicht und das Verfahren in einen stabilen Zustand übergeht.

### Bezugszeichenliste

- 1: Steuereinheit
- 1a, 1b, 1c, 1d, 1e: Steuermodule
- 2: Filtermodul
- 3: Steuermodul
- 4: Verteilerplatte
- 10: Vorrichtung
- 12: Druckgießform
- 16: Absaugvorrichtung
- 14: Bewegliche Formhälfte
- 15: Feste Formhälfte
- 18: Vakuumpumpe
- 20: Saugleitung
- 20a: Leitung
- 20b: Absaugleitung
- 21: Formvakuumventil
- 100: Verschraubung
- 101: Reduzierdoppelnippel
- 102: Filtergehäuse
- 102 a, b: Boden und Deckel
- 103: Rändelschraube
- 104: Drucksensor
- 105: Reduzierung
- 106: Manometer
- 107: Schelle
- 108: 2/2 Wegeventil
- 200: Filtereinsatz
- 202: Lochscheiben
- 203: Feinfilter
- 204: Grobfilter
- 205: O-Ring

## Patentansprüche

1. Vorrichtung (10) zur Herstellung von Druckgussteilen mit einer Druckgießform (12) und einer zur gesteuerten Evakuierung eines Formhohlraums vorgesehenen Absaugvorrichtung, welche mindestens aus einer Vakuumeinheit (18) und aus mindestens einer die Druckgießform verbindenden Saugleitung besteht, wobei die Saugleitung an einem Formvakuumventil (21) im Formhohlraum endet, wobei die Vorrichtung mit einer zentralen Steuerung (1) verbunden ist, und in der mindestens einen Saugleitung ein Filtermodul (2) eingesetzt ist, das mindestens einen Filter, einen Feuchtesensor und einen Drucksensor enthält, wobei das Filtermodul (2) so eingebaut ist, dass das Verbindungsstück zwischen Filtermodul und Formvakuumventil, eine Leitung (20a), kürzer als eine Absaugleitung (20b) zwischen Filtermodul und Vakuumpumpe ist, **dadurch gekennzeichnet,**
**dass** das Filtermodul (2) einen Filtereinsatz (200) und mindestens ein Filtergehäuse (102) bestehend aus Boden (102a) und Deckel (102b) enthält, wobei Boden und Deckel über mindestens zwei Rändelschrauben (103) miteinander dicht verbunden sind und einen Bauraum für den Filtereinsatz (200) bilden.

2. Vorrichtung (10) mit Filtermodul (2) nach Anspruch 1, **dadurch gekennzeichnet, dass** Boden (102a) und Deckel (102b) über einen O-Ring dicht miteinander verbunden sind.

3. Vorrichtung (10) mit Filtermodul (2) nach Anspruch 1oder 2, **dadurch gekennzeichnet, dass** der Filtereinsatz aus einem von zwei Lochscheiben (202) stirnseitig begrenzten Metallzylinder ausgebildet ist.

4. Vorrichtung (10) mit Filtermodul (2) nach Anspruch 3, **dadurch gekennzeichnet, dass** der Filtereinsatz mindestens ein Feinfilter (203) und ein Grobfilter (204) im Metallzylinder enthält.

5. Vorrichtung (10) mit Filtermodul (2) nach Anspruch 4, **dadurch gekennzeichnet, dass** die Feinfilter (203) und Grobfilter (204) mit einem Sicherungsring im Metallzylinder gesichert sind.

6. Vorrichtung (10) mit Filtermodul (2) nach Anspruch 1 bis 5, **dadurch gekennzeichnet, dass dadurch gekennzeichnet, dass** das Filtermodul (2) zwischen Gusswerkzeug und einer Messeinrichtung eingebaut ist.

## Claims

1. Apparatus (10) for manufacturing pressure cast components with a pressure casting mould (12) and a suction-removal apparatus which is provided for controlled evacuation of a mould cavity and which consists at least of a vacuum unit (18) and of at least one suction line which connects the pressure casting mould, wherein the suction line terminates at a mould vacuum valve (21) in the mould cavity, wherein the apparatus is connected to a central control system (1), and there is inserted in the at least one suction line a filter module (2) which contains at least one filter, a moisture sensor and a pressure sensor, wherein the filter module (2) is installed in such a manner that the connection piece between filter module and mould vacuum valve, a line (20a), is shorter than a suction-removal line (20b) between filter module and vacuum pump, **characterized**
**in that** the filter module (2) contains a filter insert (200) and at least one filter housing (102) consisting of a base (102a) and a cover (102b), wherein the base and the cover are tightly connected to each other by means of at least two knurled screws (103) and form a structural space for the filter insert (200).

2. Apparatus (10) comprising filter module (2) according to Claim 1, **characterized in that** the base (102a) and the cover (102b) are tightly connected to each other by means of an O-ring.

3. Apparatus (10) comprising filter module (2) according to Claim 1 or 2, **characterized in that** the filter insert is formed from a metal cylinder which is delimited at the end faces by two perforated plates (202).

4. Apparatus (10) comprising filter module (2) according to Claim 3, **characterized in that** the filter insert contains at least one fine filter (203) and one coarse filter (204) in the metal cylinder.

5. Apparatus (10) comprising filter module (2) according to Claim 4, **characterized in that** the fine filter (203) and the coarse filter (204) are secured in the metal cylinder by means of a securing ring.

6. Apparatus (10) comprising filter module (2) according to Claims 1 to 5, **characterized in that** the filter module (2) is installed between the casting tool and a measurement device.

## Revendications

1. Dispositif (10) de réalisation de pièces moulées sous pression à l'aide d'un moule sous pression (12) et d'un dispositif d'aspiration qui est prévu pour mise sous vide commandée d'une cavité de moule et qui comprend au moins une unité de vide (18) et au moins une conduite d'aspiration reliant le moule sous pression, la conduite d'aspiration se terminant au niveau d'une soupape de vide de moule (21) dans la cavité de moule, le dispositif étant relié à une commande centrale (1), et un module de filtration (2), qui contient au moins un filtre, un capteur d'humidité et un capteur de pression, étant inséré dans l'au moins une conduite d'aspiration, le module de filtration (2) étant installé de telle sorte que la pièce de raccordement entre le module de filtration et la soupape de vide de moule soit une conduite (20a) qui est plus courte qu'une conduite d'aspiration (20b) entre le module de filtration et la pompe à vide, **caractérisé en ce que**
le module de filtration (2) contient un insert de filtration (200) et au moins un boîtier de filtration (102) qui comprend un fond (102a) et un couvercle (102b), le fond et le couvercle étant reliés l'un à l'autre de manière étanche par au moins deux vis moletées (103) et formant un espace d'installation destiné à l'insert de filtration (200).

2. Dispositif (10) comprenant module de filtration (2) selon la revendication 1, **caractérisé en ce que** le fond (102a) et le couvercle (102b) sont reliés l'un à l'autre de manière étanche par le biais d'un joint torique.

3. Dispositif (10) comprenant un module de filtration (2) selon la revendication 1 ou 2, **caractérisé en ce que** l'insert de filtration est formé d'un cylindre métallique qui est limité du côté frontal par deux disques perforés (202).

4. Dispositif (10) comprenant un module de filtration (2) selon la revendication 3, **caractérisé en ce que** l'insert de filtration contient au moins un filtre fin (203) et un filtre grossier (204) dans le cylindre métallique.

5. Dispositif (10) comprenant un module de filtration (2) selon la revendication 4, **caractérisé en ce que** le filtre fin (203) et le filtre grossier (204) sont fixés à une bague de sécurité dans le cylindre métallique.

6. Dispositif (10) comprenant un module de filtration (2) selon les revendications 1 à 5, **caractérisé en ce que** le module de filtration (2) est installé entre l'outil de moulage et un moyen de mesure.
